# EUROPEAN PATENT SPECIFICATION

(11) **EP 2 944 835 B1**
(45) Date of publication and mention of the grant of the patent: **19.06.2019**
(21) Application number: 15153539.0
(22) Date of filing: 03.02.2015
(51) Int. Cl.: F16B 41/00, B60R 21/20

(54) **Attachment assembly**
Befestigungsanordnung
Ensemble de fixation

(30) Priority: 14.05.2014 EP 14168203
(43) Date of publication of application: 18.11.2015
(73) Proprietor: Volvo Car Corporation, 40531 Göteborg (SE)
(72) Inventor: Ljunggren, Anders, 411 43 Göteborg (SE); Nilsson, Tomas, 43932 Onsala (SE)
(74) Representative: Valea AB

(56) References cited:
- EP-A1- 2 682 615
- EP-A1- 2 685 113
- DE-B3-102006 034 463
- US-A- 3 137 336
- US-A1- 2008 038 086
- US-B2- 6 851 710

## Description

### TECHNICAL FIELD

The present disclosure relates to an attachment assembly for attaching a second object to a first object. The disclosure further relates to a use of the attachment assembly for attaching an automotive part, such as an inflatable curtain arrangement, to a vehicle. In addition the disclosure relates to a unit for use in the attachment assembly, a first kit, a second kit, a vehicle, as well as to a method for attaching a second object to a first object.

### BACKGROUND

Attaching a second object to a first object may sometimes be difficult for one person, since there is a desire to simultaneously hold the second object at a suitable position for fastening to the first object, to hold a fastening member, such as a screw, and to hold a tool used for attaching the fastening member, such as a screw-driver. The difficulties are increased if the second object is large and/or heavy. It is also more difficult if there is limited space available for the person doing the work and/or the person is unable to see the position of the attachment.

A typical situation may be when attaching an object, such as a panel, to a wall or a ceiling of a building, e.g. during construction. Another typical situation is during assembly of a vehicle when attaching an automotive part to the vehicle, e.g. when attaching an inflatable curtain arrangement to a cantrail, i.e. the portion of a vehicle body extending between the A, B and/or C pillars at the upper part of the vehicle. The inflatable curtain arrangement comprises a curtain-shaped airbag, which is adapted to cover the upper part of a vehicle's side in case of a side impact collision, thereby cushioning the heads of the passengers seated at that side. Since the inflatable curtain arrangement is part of a passenger protection system, it is desired that the fastening member is secured by a predetermined torque.

Such attachment work may be carried out more easily by two persons, e.g. one person holding the second object in position and the other fastening it by means of the fastening member using the tool.

Prior art solutions making it possible for one person to attach one object to another include using a temporary fixation of the second object to the first object, e.g. by means of a clamp to the first object or by a stand standing on e.g. the floor and pressing the second object towards the first object. Time is then spent to arrange the temporary fixation and to remove it afterwards.

Document US 6,851,710 B2 discloses using a clip, which is pushed into a corresponding opening of the vehicle surface thereby attaching an inflatable curtain arrangement to a vehicle. One embodiment discloses that a clip is used in combination with a rigid mechanical fastener, illustrated as a bolt.

In some situations, a clip does not provide enough mechanical strength of the final attachment. In the solution of US 6,851,710 B2 comprising the combined use of the clip and the rigid mechanical fastener, two different attachment steps are carried out by the operator, which takes some extra time.

There is thus a desire for an improved attachment system, in particular for attaching an inflatable curtain arrangement to a vehicle, which attachment system is suitable for being handled by one person.

Document US 2008/0038086 discloses a threaded fastener with retainer. A fastener element has a head section, a threaded shank section with threads at a pitch and a distal end section. A retention device is secured to the distal end section and is engageable with a fastener receiving member. In one embodiment, the retention device is a cap member that fits over the distal end section.

### SUMMARY

The object of the present disclosure is to overcome or ameliorate at least one of the disadvantages of the prior art, or to provide a useful alternative.

It is desirable to provide an attachment assembly, which offers a less complicated and easier to use attachment than the prior art.

It is further desirable that one person can carry out the attachment alone.

An object above may be achieved by the subject-matter of claim 1.

Thus, in a first aspect of the present invention there is provided a unit for use in an attachment assembly for attaching a second object to a first object. According to claim 1, the unit comprises a thread-cutting or a thread-forming screw and a retaining element positioned at a perimeter of said shaft of said screw. Said screw has a head and a shaft, at least a portion of said shaft comprising a thread. Said retaining element is fixedly attached to said screw at or adjacent to an end of said shaft of said screw. Said retaining element is an end cap. Said retaining element has a flat outer surface as seen along the axial direction without any flange or thread.

The attachment assembly comprises a screw and a nut. The screw has a head and a shaft and at least a portion of the shaft comprises a thread. The nut is adapted to be fixedly attached to the first object. The nut comprises a bore adapted for receiving the screw. The bore has an axial direction and a height along the axial direction. The attachment assembly further comprises a retaining element, which is adapted to be positioned at a perimeter of the shaft of the screw. The bore comprises an inner wall, at least a portion of the inner wall being adapted for receiving and holding the retaining element at least in the axial direction. The bore is unthreaded and the screw is a thread-cutting screw or a thread-forming screw, which is adapted to cooperate with the bore.

The first object may be a wall or a ceiling of a building. Alternatively, the first object may be a body portion of a vehicle, e.g. a cantrail or an A, B or C pillar.

The second object is typically large and/or heavy, such that it is difficult to handle for one person. If in a building, the second object may be a panel, e.g. a wall panel or ceiling panel. If in a vehicle, the second object may be a panel or an inflatable curtain arrangement.

The bore may be a through-going axial bore or it may be a blind bore. The at least a portion of the inner wall of the bore may have an inner diameter which is less than the outer thread diameter of the screw.

The screw is intended to be screwed into the nut, which is fixedly attached to the first object to thereby attach the second object to the first object. As used herein, a screw is a fastener capable of being inserted into holes in assembled parts, forming its own thread, and of being tightened or released by torqueing a head of the screw.

The nut may be fixedly attached to a first substantially plate-shaped portion of the first object, which first portion comprises a first aperture. The nut is fixedly attached or attachable to the first portion e.g. by welding or adhesively, such that the nut is aligned with the first aperture, i.e. the bore of the nut is aligned with the first aperture, such that a screw going through the first aperture also can go through the bore. If welded, the nut may constitute a weld nut. The first aperture may be circular, polygonal or have an arbitrary shape. It should be large enough to allow the shaft of screw to pass. Yet, the nut should remain on the upper side of the first portion.

Since the retaining element is positioned on the screw, the user of the attachment assembly can easily ascertain that the retaining element is present, e.g. by looking at the screw or by touching it. This is in comparison to prior art attachment assemblies, wherein a retaining element is instead located in the nut, e.g. inside the bore, which is more difficult to see and/or touch.

The screw and the nut are manufactured separately from each other. They may also be sold and/or used as separate units, being prepared for later attachment to each other. Purely as an example, the nut may be delivered as a part of a first kit also comprising the first object, e.g. a cantrail being sent to an assembly plant for vehicles, wherein another automotive part, such as an inflatable curtain arrangement, is attached to the cantrail. The screw may be delivered as a separate unit or may be delivered as part of a second kit also comprising the automotive part. The retaining element may be delivered mounted to the screw or it may be delivered as a separate unit to be mounted to the screw at the assembly plant.

Preferably the second object, e.g. a second substantially plate-shaped portion of it, is provided with a second aperture having a large enough diameter and/or shape for the shaft of the screw to pass. The second aperture may be circular, polygonal or have an arbitrary shape. The head of the screw has a larger diameter than the shaft, such that the screw is able to retain the second object in place by means of the head. Alternatively, or as a complement, a washer may be used adjacent to the head of the screw for retaining the second object.

The screw is adapted to be pushed into the bore of the nut as far enough for the retaining element to be retained by the portion of the inner wall of the bore, wherein the retaining element is retained in such a way that it can retain the screw, and optionally the second object. The attachment assembly may be configured such that the retaining element can carry the weight of the screw. As an alternative, or as a complement, the attachment assembly may be configured such that the retaining element can carry the weight of the second object and the screw. The attachment may be performed when the second object is in a hanging position. Purely as an example, the shape, the size, the material, the resiliency and/or the position of the retaining element may be selected in order to achieve the desired weight-carrying capacity. However, it is preferably possible to pull out the screw again if applying a force above a predetermined level, e.g. if the second object is going to be exchanged. This predetermined level is selected to be high enough to ascertain that under normal conditions the retaining element is strong enough to retain the screw including the weight of the second object.

The nut may comprise an indentation adapted for receiving and holding the retaining element at least in the axial direction, the indentation forming a portion of the inner wall of the bore. There is then provided an attachment assembly for attaching a second object to a first object. The attachment assembly comprises a screw and a nut. The screw has a head and a shaft and at least a portion of the shaft comprises a thread. The nut is adapted to be fixedly attached to the first object. The nut comprises a bore adapted for receiving the screw. The bore has an axial direction and a height along the axial direction. The attachment assembly further comprises a retaining element, which is adapted to be positioned at a perimeter of the shaft of the screw. The nut comprises an indentation adapted for receiving and holding the retaining element at least in the axial direction.

If the nut comprises an indentation, the screw is adapted to be pushed into the bore of the nut as far enough for the retaining element to reach the indentation, wherein the retaining element is received in such a way that the indentation can retain the screw, and optionally the second object. Preferably, a snap-in function is obtained by the shape and/or resiliency of the retaining element in relation to the indentation. The indentation may have a shape corresponding to the shape of the retaining element. Further, the screw is retained by the nut, once the screw has reached a pre-defined position in relation to the nut and hence also in relation to the first object. The pre-defined position is determined by the location of the indentation in the nut and the relative position of the retaining element on the screw. This differs from some prior art attachment assemblies, wherein the screw indeed is retained by the nut, but wherein there is no predefined relative position between the screw and the nut when retained.

Moreover, by utilizing the above-mentioned snap-in function into the indentation the person pushing the screw into the nut can easily determine that the retaining element has reached the intended position in the indentation without having to see the attachment assembly itself, e.g. by sensing that the retaining element has reached its proper retaining position and/or by an audible "click" being heard.

The indentation may be located at a perimeter of the bore of the nut. It may be manufactured in the same manufacturing step as the bore.

The indentation may be located at a first end of the bore, which end is adapted to face the first object. Then the retaining element may be received in a space defined by the indentation and the first object together.

As an alternative, or as a complement, the indentation may be located within the bore, such that a distance x between the first end of the bore facing the first object and the indentation fulfils 0 < x ≤ h, preferably such that 0.1 h ≤ x ≤ h. Thereby the space for receiving and retaining the retaining element is independent of the diameter and the shape of the first aperture.

As an alternative to the above-described indentation comprised in the bore to receive and hold the retaining element, a main portion of the bore may comprise a substantially flat inner wall having a cylindrical shape. The retaining element may then be held by friction to the inner wall and/or by a resilient force resulting from deforming a resilient retaining element. The main portion of the bore is the portion intended to cooperate with the screw.

An end portion of the bore located at the end of the bore facing the first object may have a wider cross-section than the main portion of the bore, which is located further away from the first object. Thereby a possible misalignment between the shaft of the screw and the axial direction of the bore may be compensated for, since the screw may be entered into the bore at a somewhat oblique angle.

The retaining element may in embodiments not falling under the scope of the claims be adapted to be positioned in a thread on the shaft of the screw. This will help to hold the retaining element in place on the screw. As an alternative, or as a complement, the retaining element may in embodiments not falling under the scope of the claims be held by friction to the shaft of the screw, or it may be adhered to the screw by an adhesive. As yet an alternative, the shaft may be provided with a groove, particularly adapted to hold the retaining element.

The retaining element is fixedly attached to the shaft of the screw, e.g. adhered to the screw by an adhesive or a snap-in function.

The retaining element is located at or adjacent to an end of the shaft of the screw. However, the retaining element is anyway positioned at the perimeter of the shaft of the screw, such that the retaining element forms part of the perimeter. The end of the screw is at the end of the shaft, which end is opposite to the head. The end is hence furthest away from the head.

The retaining element may in embodiments not falling under the scope of the claims comprise, or be constituted by, a ring-shaped member, e.g. a ring with a closed perimeter or a slotted ring, the ring-shaped member having an inner diameter being adapted to cooperate with the shaft of the screw. The ring-shaped member preferably has a circular cross-section. The inner diameter of the ring-shaped member may be less than an outer thread diameter of the screw and larger than an inner thread diameter of the screw, such that the retaining element may be held in a thread on the screw.

The retaining element may be resilient, e.g. having a resilient shape and/or comprising a resilient member. The retaining element may be resilient in the plane of the retaining element, e.g. by being able to change its diameter. The retaining element may be compressible in the radial direction. As an alternative, or as a complement, the retaining element may be able to flex out of its plane, e.g. in the axial direction. The retaining element may be bendable or foldable in the axial direction. Thereby the effective outer diameter is changed. The whole retaining element may be resilient or one or more portions of it may be resilient.

The retaining element may be adapted to be held by friction and/or by a resilient force to to the at least a portion of the inner wall of the bore. The resilient force may result from deforming a resilient retaining element. The retaining element may have a somewhat larger diameter than at least the main portion of the bore.

The retaining element is an end cap attached to the screw. The end cap may be snap-fitted to the screw and/or attached to it by means of an adhesive. The screw and the retaining element thus form an integral unit when being handled by the person, performing the attachment. The maximum cross-sectional dimension of the end cap may be chosen to be less than the outer thread diameter of the screw but larger than the inner thread diameter of the screw.

The end cap may comprise at least one protrusion, e.g. one, two, three, four, six or eight, which protrude in a radial direction and ascertain a good contact between the retaining element and the inner wall of the bore. The protrusion may also extend in the axial direction of the shaft of the screw. Purely as an example, the protrusion may extend longer in the axial direction of the shaft than a corresponding axial distance between two adjacent threads. The protrusion may e.g. extend in the range of 1-5 millimetres. The end cap, including any protrusions, may be made of an at least somewhat resilient material, such as a polymer. The end cap has a flat outer surface as seen along the axial direction, i.e. it does not comprise any flange, nor any thread. The protrusion may have a major extension in the axial direction of the screw.

During attachment, the screw may be held by friction between the protrusions and the main portion of the bore. If a cross-sectional dimension through at least one of the protrusions and the axis of the screw is larger than the diameter of the main portion of the bore, the protrusions will be deformed when pushing the screw into the bore. The protrusions then strive to go back to their original shape resulting in a resilient force contributing to holding the screw in the intended place. This kind of retaining element is appropriate for a bore having a flat inner wall. There is no need for an indentation or any thread in the bore in order to retain the screw. There may also be a resilient force resulting from the retaining element itself having a larger diameter than the diameter of the main portion of the bore. In that case the protrusions may be dispensed with. The retaining element may then be deformed also in an axial direction.

As mentioned above, the screw is a thread-cutting screw or a thread-forming screw. At least a portion of the bore may in that case have an inner diameter which is less than the outer thread diameter of the screw. A thread-cutting screw or thread-forming screw provides a higher friction than a corresponding non-thread-cutting screw or non-thread-forming screw, thereby increasing the mechanical strength of the attachment. It is thus possible to use a screw of smaller dimensions, e.g. by going down one step in the ISO metric M series of screw dimensions. In addition, using a thread-cutting screw or a thread-forming screw reduces the risk that the attachment assembly is destroyed due to improper alignment of the threads of the screw and the bore, respectively. There will thus be a higher tolerance for tightening the screw with a slightly oblique angle. Further, by using an unthreaded bore and a thread-cutting screw or thread-forming screw, the risk of a defect thread and/or of a thread blocked by debris is avoided, since the thread is cut or formed when they are to be used.

A suitable material for the screw is steel. A suitable material for the nut is steel. The material characteristics of the nut are selected such that the screw is able to cut or form a thread in the nut.

In a second aspect of the present invention there is provided a use of an attachment assembly as described herein for attaching an automotive part to a vehicle, wherein the first object is a body portion of the vehicle, e.g. a cantrail, and the second object is an automotive part, e.g. an inflatable curtain arrangement.

According to the invention, there is provided a unit for use in the attachment assembly described herein. The unit comprises a thread-cutting screw, which comprises a head and a shaft, at least a portion of the shaft comprising a thread, and a retaining element positioned at a perimeter of the shaft of the screw. The retaining element is fixedly attached to the screw at or adjacent to an end of the shaft of the screw. The retaining element comprises a flat outer surface as seen along the axial direction of the screw. The retaining element may further comprise at least one protrusion as described herein.

In an aspect not falling under the scope of the claims, there is provided a first kit comprising a cantrail for a vehicle and the nut of the attachment assembly as described herein. The cantrail comprises a first substantially plate-shaped portion, which comprises a first aperture. The nut is fixedly attached to the first portion aligned with the first aperture. The nut may be attached by welding, thus constituting a weld nut. The first aperture may be circular, polygonal or have an arbitrary shape. The nut may comprise the above-mentioned indentation.

In another aspect of the present invention there is provided a second kit according to claim 9. The kit comprises an inflatable curtain arrangement for a vehicle, the screw of the attachment assembly as described herein and the retaining element of the attachment assembly as described herein. The retaining element is positioned at the screw. The inflatable curtain arrangement comprises a second substantially plate-shaped portion comprising a second aperture. The second aperture may be circular, polygonal or have an arbitrary shape. The shaft of the screw goes through the second aperture, such that the head of the screw is located at one side of the second portion and the retaining element at an opposite side of the second portion. The second aperture has a shape/diameter which is larger than that of an inner diameter of the shaft of the screw and less than an outer shape/diameter of the retaining element and less than an outer shape/diameter of the head of the screw.

In a further aspect of the present invention there is provided a vehicle comprising an attachment assembly as described herein, the unit for use in the attachment assembly, and/or a second kit as described herein.

In yet another aspect of the present invention, there is provided a method according to claim 10 for attaching a second object to a first object by means of an attachment assembly as described herein. The first object comprises a first substantially plate-shaped portion comprising a first aperture. The second object comprises a second substantially plate-shaped portion comprising a second aperture. The attachment assembly comprises a screw having a head and a shaft, at least a portion of the shaft comprising a thread, a nut comprising a bore adapted for receiving the screw, the bore having an axial direction, and a retaining element adapted to be positioned at a perimeter of the shaft of the screw. The bore comprises an inner wall, at least a portion of the inner wall being adapted for receiving and holding the retaining element at least in the axial direction. The method comprises the steps of:
a) Attaching the nut to the first portion of the first object, such that the bore is aligned with the first aperture.
b) Positioning the retaining element at the screw.
c) Placing the second object adjacent to the first object in a position allowing the screw to be screwed into the nut.
d) Applying a force in the axial direction to the screw, thereby pushing the retaining element through the first aperture and into the bore of the nut, such that the retaining element is received and held at least in the axial direction.
e) Letting the retaining element retain the screw, and optionally the second object, while screwing the screw into the nut, wherein the screw cuts or forms its thread at the inner wall of the bore during screwing, thereby attaching the second object to the first object.

The step a) may be performed beforehand, such that the first object is delivered with a fixedly attached nut, e.g. to an assembly plant for vehicles.

The step b) may be performed beforehand.

If using the above-mentioned retaining element, which is fixedly attached to the shaft of the screw, the screw and the retaining element may be handled as an integral unit. The attachment of the retaining element to the screw may in that case be performed in a separate manufacturing line delivering the integral unit of the screw and the retaining element. Then the integral unit is pushed through the second object, through the first object and into the bore in one pushing operation in step d). It is then assumed that the second object has been placed adjacent to the first object in a position allowing the screw to be screwed into the nut.

If using a retaining element which is not fixedly attached to the shaft of the screw, the second object may be delivered with the screw attached to it, such that the head of the screw is located at one side of the second object and the retaining element at an opposite side of the second object, the shaft of the screw going through the second aperture. As an alternative the retaining element may be positioned on the screw when performing the attachment.

The retaining element may be held in an indentation as described above, e.g. by a snap-fit function, as is described above. See step d). As an alternative or a complement, the retaining element may be held by friction to the inner wall of the bore and/or by a resilient force resulting from deforming a resilient retaining element, as is also described above.

The first object may be a body portion of a vehicle, such as a cantrail, and the second object may be an inflatable curtain arrangement.

### BRIEF DESCRIPTION OF THE DRAWINGS

The present invention will hereinafter be further explained by means of non-limiting examples with reference to the appended drawings wherein:
Fig. 1 is a schematic side view of a portion of a vehicle comprising an inflatable curtain arrangement,
Fig. 2 illustrates the inflatable curtain arrangement in a storage state,
Fig. 3 illustrates an embodiment of an attachment assembly with a unit comprising a screw and a retaining element not falling under the scope of the claims,
Fig. 4 is a schematic cross-sectional view of a nut of the attachment assembly of Fig. 3,
Fig. 5a and b illustrate the attachment assembly of Fig. 3 in use,
Fig. 6 is a schematic cross-sectional view of another nut of the attachment assembly,
Fig. 7 is a schematic cross-sectional view of yet another nut of a of the attachment assembly,
Fig. 8 is a schematic view of a unit comprising a screw and a retaining element of a unit according to an embodiment of the invention,
Fig. 9 is a schematic view of the attachment assembly of Fig. 7 and 8 in use,
Fig. 10a-c illustrate a retaining element not falling under the scope of the claims in an untensioned state and in a tensioned state,
Fig. 11a-b illustrate an alternative retaining element not falling under the scope of the claims in a untensioned state and in a tensioned state,
Fig. 12a-c illustrate a second alternative retaining element not falling under the scope of the claims in an untensioned state and in a tensioned state,
Fig. 13a-c illustrate a third alternative retaining element not falling under the scope of the claims in an untensioned state and in a tensioned state,
Fig. 14a-b illustrate a fourth alternative retaining element not falling under the scope of the claims in an untensioned state and in a tensioned state, and
Fig. 15 illustrates a fifth alternative retaining element not falling under the scope of the claims.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

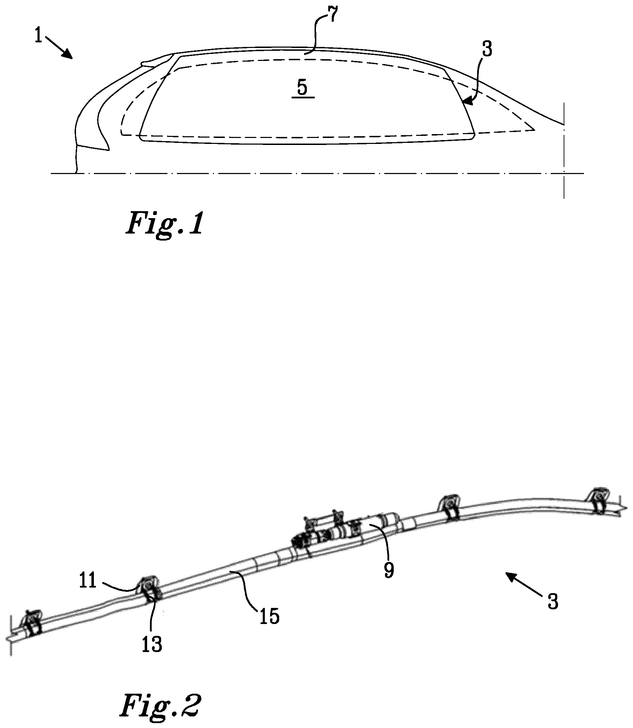

Figure 1 schematically illustrates a side view of a portion of a vehicle 1 comprising an inflatable curtain arrangement 3. The inflatable curtain arrangement 3 is shown in its deployed state, wherein an inflatable curtain 5 is ready to protect a passenger at a side impact on the vehicle 1. The inflatable curtain arrangement 3 is attached to a body of the vehicle 1, e.g. to a cantrail 7.

Normally the inflatable curtain arrangement 3 is in a storage state, see Figure 2, wherein it is folded and or rolled to a tubular shape. An inflator 9 is connected to the inflatable curtain arrangement. The inflator 9 may be activated by crash sensors, in case a collision occurs, thereby inflating the inflatable curtain arrangement 3, such that it assumes the deployed state as illustrated by Figure 1.

The inflatable curtain arrangement 3 is attached to the cantrail 7 by means of brackets 11 comprised in the inflatable curtain arrangement 3. The brackets 11 are used to retain the inflatable curtain arrangement 3 to the cantrail 7. In the illustrated embodiment, a portion 13 of the bracket 11 at least partly encircles a tubular body 15 of the inflatable curtain arrangement 3. The encircling portion 13 may be resilient and comprise a slot (not illustrated). When the encircling portion 13 is to be connected to the tubular body 15, the slot may in that case be widened such that the tubular body 15 can be entered through the slot and then the encircling portion 13 springs back to a retaining position, as the one illustrated in Figure 2. Alternatively, the bracket may be clipped to or around the tubular body 15, or the bracket may be glued or welded to the inflatable curtain arrangement 3.

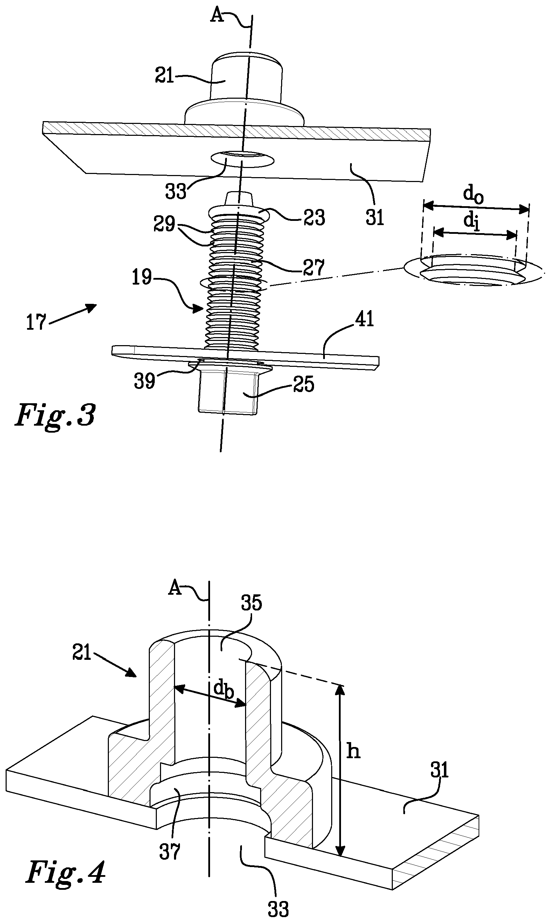

Figures 3-5 illustrate an attachment assembly 17 with a unit not falling under the scope of the claims. The attachment assembly 17 of comprises a screw 19, a nut 21 and a retaining element 23, with the unit comprising the screw 19 and the retaining element 23 not falling under the scope of the claims.

The screw 19 comprises a head 25 and a shaft 27. At least a portion of the shaft 27, preferably a major portion of the shaft 27, is provided with a thread 29 following the surface of the shaft 27. The screw 19 has an outer diameter dₒ defined by the ridges of the thread 29 and an inner diameter dᵢ defined by the grooves of the thread 29. By definition the inner diameter is less than the outer diameter, dᵢ < dₒ.

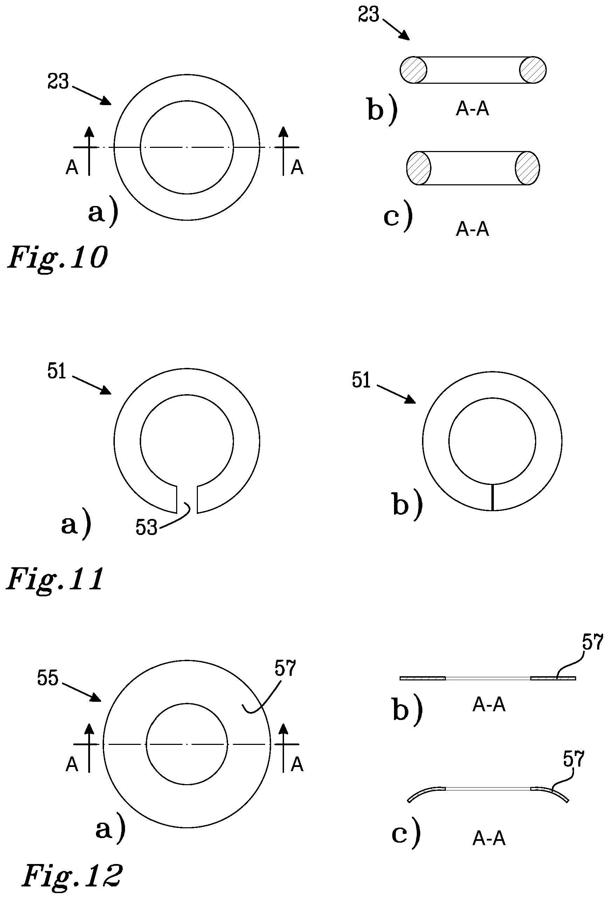

The retaining element 23 is adapted to be positioned at a perimeter of the shaft 27 of the screw 19. In the illustrated example the retaining element 23 is constituted by a ring-shaped member made of resilient material, such as rubber or plastic. The ring-shaped member 23 is further described in conjunction with Figure 10. Other examples of retaining elements are described in conjunction with Figures 11-15. The ring-shaped member 23 may substantially located in the thread 29, such that the thread 29 can help to keep the ring-shaped member 23 at the screw, thereby preventing it from falling off and/or getting lost. As an alternative, or as a complement, the ring-shaped member 23 may be held by friction to the shaft 27 of the screw 19, or the ring-shaped member 23 may be adhered to the screw 19 by an adhesive.

The nut 21 is fixedly attached to a first substantially plate-shaped portion 31 of a first object, e.g. of the cantrail 7 of Figure 1, which first portion 31 comprises a first aperture 33. The nut 21 is fixedly attached to the first portion 31 e.g. by welding, such that the nut 21 is aligned with the first aperture 33, the nut 21 then constituting a weld nut. The first aperture 33 may be circular, as is illustrated, polygonal or have an arbitrary shape. It should be large enough to allow the shaft 27 of screw 19 to pass. Yet, the nut 21 should remain on the upper side of the first portion 31.

Figure 4 shows a cross-section of the nut 21. The nut 21 comprises a bore 35 adapted for receiving the screw 19. The bore 35 has an axial direction A, a height h along the axial direction and it comprises a main portion having a diameter d_{b}. In the illustrated embodiment, the bore 35 goes all the way through the nut 21, but it may also be a blind bore. The nut 21 further comprises an indentation 37 adapted for receiving and holding the retaining element 23 at least in the axial direction A. The indentation 37 may allow rotational movement of the retaining element 23 around the axial direction A. In the illustrated embodiment a space is defined by the indentation 37 and the upper surface of the first portion 31 in a region around the first aperture 33, which space is adapted for receiving and retaining the retaining element 23.

Going back again to Figure 3, it may be gleaned that the screw 19 is located such that the shaft 27 goes through a second aperture 39 in a second substantially plate-shaped portion 41 of a second object, e.g. the bracket 11 forming a part of an inflatable curtain arrangement 3 as shown in Figure 2. The second aperture 39 has a diameter, which is large enough for the shaft 27 of the screw 19 to go through, but which is small enough for the head 25 of the screw 19 to be stopped, such that the head 25 will be able to retain the inflatable curtain arrangement 3, once the screw 19 has been attached to the body of the vehicle, e.g. the cantrail 7. The second aperture 39 may be circular, polygonal or have an arbitrary shape. The head 25 of the screw 19 has a larger diameter than the rest of the screw 19. Optionally a washer may be used to further increase the diameter of the head. The head 25 is located below the second portion 41 and the retaining element 23 is located above the second portion 41. The outer shape of the retaining element 23 is larger than that of second aperture 39, such that the retaining element 23 will hold the screw in place in the second object, e.g. the bracket 11. This helps to retain the screw 19 in the inflatable curtain arrangement 3, thereby avoiding, or at least reducing, the risk of dropping the screw 19.

The screw 19 is thread-forming or thread-cutting, and the nut 21 unthreaded, such that the screw 19 can form or cut a thread on its way through the bore 35.

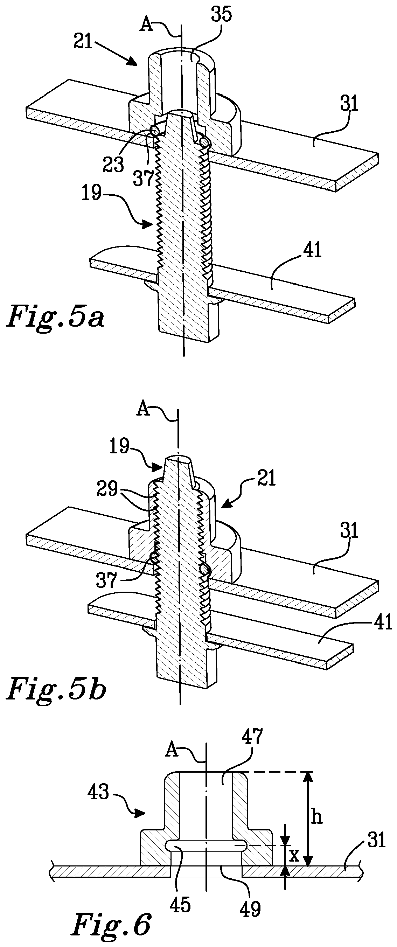

Figure 5a illustrates the situation after the screw 19 has been pushed into the nut 21 by an axial force. The screw 19 will enter also if the force deviates from the axial direction A, as long as it has a component in the axial direction A. The axial force used to push the screw 19 is not especially high; to push the screw 19 by hand force is for example sufficient. As the screw 19 is being pushed inwards through the first aperture 33 and into the nut 21, the retaining element 23 is pushed until it reaches the indentation 37, it then expands and fills the indentation 37, achieving a snap-in function, such that the person pushing the screw 19 can determine that the retaining element 23 has reached the intended position in the indentation 37 and the screw 19 thus has reached a pre-defined position in relation to the nut 21, and hence to the first object, without having to see the attachment assembly 17 itself, e.g. by sensing that the retaining element 23 has reached its proper retaining position and/or by an audible "click" being heard.

The retaining element 23 will keep the screw 19 in place relative to the nut 21 and hence to the first object, here the first portion 31. The screw 19 will not move outwards again by itself, since it is retained by the retaining element 23.

The shape and the resiliency of the retaining element 23 may be adapted to hold the screw 19. Moreover, the shape and the resiliency of the retaining element 23 may be adapted such that when the screw 19 is used to hold an object, for example an inflatable curtain arrangement 3, the retaining element 23 is strong enough to retain the screw 19 including the weight of the inflatable curtain arrangement 3. However, it is preferably anyway possible to pull out the screw 19 again if applying a force above a predetermined level, e.g. if the inflatable curtain arrangement 3 is going to be exchanged. This predetermined level is selected to be high enough to ascertain that under normal conditions the retaining element 23 is strong enough to retain the screw 19 including the weight of the inflatable curtain arrangement 3.

In order to move the screw 19 further inwards into the bore 35, the screw 19 will be screwed, e.g. with a predefined torque. See Figure 5b. Since the object to be attached, i.e. the second object, in the example the inflatable curtain arrangement 3, is held in position at the object whereto it is to be attached, i.e. the first object, in this example the cantrail 7, by the screw 19 being retained by the retaining element 23 in the indentation 37, the person making the attachment will have both hands free to attach the screw 19 to the nut 21. The screw 19 is preferably attached by a predefined torque which is selected to fulfil security and/or quality standards. In the illustrated embodiment, the screw 19 is thread-forming, i.e. the screw 19 forms its own thread while being screwed into the bore 35.

The above-described attachment assembly 17 may be handled also for the case when the person making the attachment cannot see the attachment assembly 17 during assembly.

Figure 6 is a schematic cross-sectional view of another nut 43 of the attachment assembly according to the invention. The nut 43 of the second embodiment differs from the nut 21 of the first embodiment in that an indentation 45 is formed entirely in the nut 43 itself. The nut 43 comprises a bore 47 adapted for receiving the screw 19. The bore 47 has an axial direction A and a height h along the axial direction. The indentation 45 is adapted to hold the retaining element 23 at least in the axial direction A, but may allow rotational movement of the retaining element 23 around the axial direction A. In the illustrated embodiment, the bore 47 goes all the way through the nut 43, but it may also be a blind bore. The indentation 45 is located at a distance x from a first end 49 of bore 47 facing the first object, here the first portion 31, wherein x fulfils 0 < x ≤ h, preferably such that 0.1 h ≤ x ≤ h, h being the height along the axial direction A.

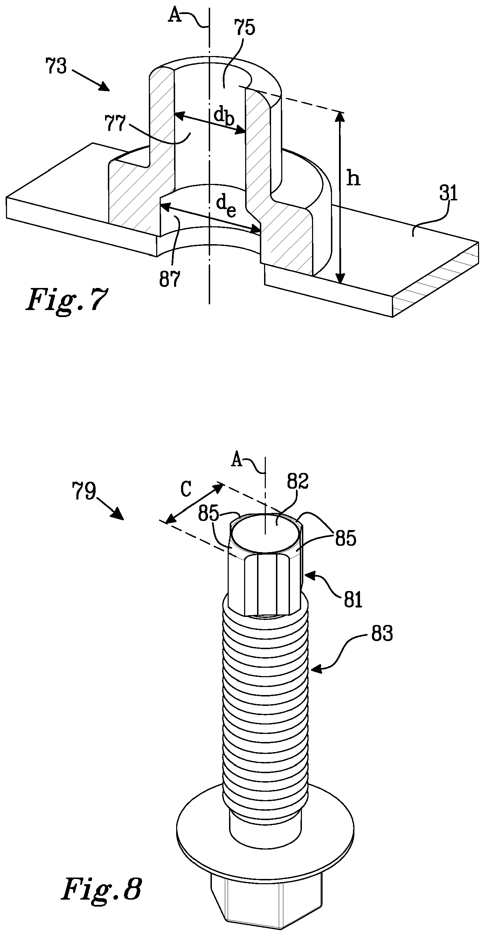

Figures 7-9 illustrate an embodiment of the attachment assembly according to the invention. Figure 7 illustrates the nut 73, which differs from those of the first and second embodiment in that there is no indentation in the bore 75. Instead, as will be further described below, the retaining element is instead held by friction and resilient force in the main portion 77 of the bore 75 during attachment. The main portion 77 of the bore 75 has a cylindrical inner wall with a diameter d_{b}.

Figure 8 illustrates the screw 79 having a retaining element in the form of an end cap 81 fixedly attached to the screw 79 at an end 82 of the screw 79. The end cap 81 may be snap-fitted to the screw 79 and/or attached to it by means of an adhesive. The screw 79 and the retaining element 81 form an integral unit when being handled by the person performing the attachment. The shaft of the screw 79 is provided with a thread 83. The screw 79 has an outer diameter dₒ defined by the ridges of the thread 83 and an inner diameter dᵢ defined by the grooves of the thread 83, the definitions being indicated in Figure 3. By definition the inner diameter is less than the outer diameter, dᵢ < dₒ.

The end cap 81 comprises a number of protrusions 85, in the illustrated embodiment four protrusions 85. They protrude in a radial direction and are adapted to ascertain a good contact between the retaining element 81 and the inner wall of the main portion 77 of the bore 75, when the screw 79 is pushed into the bore 75. The protrusions 85 also extend in the axial direction of the shaft of the screw. The end cap 81 is made of a resilient material, such as a polymer.

The end cap 81 has a flat outer surface as seen along the axial direction of the shaft of the screw 79. Also the surface of the protrusions 85 is flat as seen along the axial direction. The flat surface of the end cap 81 extends longer than the axial distance between two adjacent threads 83, e.g. in the range of 1-5 millimetres. The end cap 81 has no flange or thread.

An end portion 87 of the bore 75 to be located at the end of the bore 75 facing the first object 31 has a larger diameter dₑ than the diameter d_{b} of the main portion 77 of the bore 75, which is located further away from the first object 31. Thereby a possible misalignment between the shaft of the screw 79 and the axial direction A of the bore 75 may be compensated for, since the screw 79 may be entered into the bore 75 at a somewhat oblique angle. This kind of wider end portion may also be seen in the first and second embodiments illustrated in Figure 4 and Figure 6.

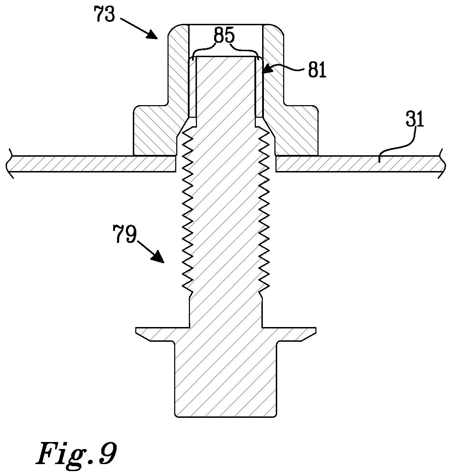

Figure 9 illustrates the situation after the screw 79 has been pushed into the bore 75 by an axial force, such that the retaining element 81 contacts the main portion 77 of the bore 75. The screw 79 will enter also if the force deviates from the axial direction A, as long as it has a component in the axial direction A. The axial force used to push the screw 79 is not especially high; to push the screw 79 by hand force may for example be sufficient.

The retaining element 81 will then keep the screw 79 in place relative to the nut 73 and hence to the first object, here the first portion 31. The screw 79 will not move outwards again by itself, since it is retained by the retaining element 81.

The shape, the position and the resiliency of the retaining element 81 may be adapted to hold the screw 19. Moreover, the shape and the resiliency of the retaining element 81 may be adapted such that when the screw 19 is used to hold an object, for example an inflatable curtain arrangement 3, the retaining element 81 is strong enough to retain the screw 79 including the weight of the inflatable curtain arrangement 3. However, it is preferably possible to pull out the screw 79 again if applying a force above a predetermined level, e.g. if the inflatable curtain arrangement 3 is going to be exchanged. This predetermined level is selected to be high enough to ascertain that under normal conditions the retaining element 81 is strong enough to retain the screw 79 including the weight of the inflatable curtain arrangement 3.

In the illustrated embodiment according to the invention, the screw 79 is held by friction between the protrusions 85 and the main portion 77 of the bore 75. Further, since a cross-sectional dimension c through two of the protrusions 85 and the axis of the screw 79 is larger than the diameter d_{b} of the main portion 77 of the bore 75, see Figure 8, the protrusions 85 will be somewhat deformed when the screw 79 is pushed into the bore 75. They then strive to go back to their original shape resulting in a resilient force contributing to holding the screw 79 in the intended place. This kind of retaining element 81 is appropriate for a bore 75 having a flat inner wall. There is no need for an indentation or any thread in the bore in order to retain the screw 79.

In order to move the screw 79 further inwards into the bore 75, the screw 79 will be screwed, e.g. with a predefined torque. Since the object to be attached, i.e. the second object, in the example the inflatable curtain arrangement 3, is held in position at the object whereto it is to be attached, i.e. the first object, in this example the cantrail 7, by the screw 79 being retained by the retaining element 81 in the main portion 77 of the bore 75, the person making the attachment will have both hands free to attach the screw 79 to the nut 73. The screw 79 is preferably attached by a predefined torque which is selected to fulfil security and/or quality standards. Since the screw 79 is thread-cutting, it cuts its own thread in the main portion 77 of the bore 75 while being screwed into the bore 75.

Figures 10-15 illustrate different variants of the retaining element not falling under the scope of the claims.

Figures 10a-c illustrate a ring-shaped member 23, as in the unit of the attachment assembly 17 illustrated in Figures 3-5. The ring-shaped member 23 is made of resilient material, such as rubber or plastic, which can change its shape. Thereby the outer diameter of the ring-shaped member 51 is less in the tensioned state than in the untensioned state. Figure 10b shows a cross-section of the ring-shaped member 23 in an untensioned state, i.e. having a normal shape, while Figure 10c shows the ring-shaped member 23 in a tensioned state, such as when pushing the screw 19 upwards into the bore 35, 47. The cross-section is then oval. Thereby the outer diameter of the ring-shaped member 23 is less in the tensioned state than in the untensioned state. When the ring-shaped member 23 reaches the indentation 37, 45, it will spring back to its substantially normal shape, i.e. snapping into the indentation 37, 45, thereby retaining the screw 19.

Figures 11a and 11b illustrate a second type of ring-shaped member 51. The ring-shaped member 51 has a slot 53. Figure 11a shows the ring-shaped member 51 in an untensioned state, i.e. having a normal shape, wherein the slot 53 is open. Figure 11b shows the ring-shaped member 51 in a tensioned state, such as when pushing the screw 19 upwards into the bore 35, 47, wherein the slot 53 is less wide than in the untensioned state or even closed. This is achieved by flexing the ring-shaped member 51 in the plane of the ring-shaped member 51 itself. Thereby the outer diameter of the ring-shaped member 51 is less in the tensioned state than in the untensioned state. When the ring-shaped member 51 reaches the indentation 37, 45, it will spring back to its substantially normal shape, i.e. snapping into the indentation 37, 45, thereby retaining the screw 19.

Figures 12a-c illustrate a third type of ring-shaped member 55. The ring-shaped member 55 comprises, or is constituted by, a brim 57, which is able to flex out of the plane of the ring-shaped member 55 itself. Figure 12b shows a cross-section of the ring-shaped member 55 in an untensioned state, while Figure 12c shows a cross-section of the ring-shaped member 55 in a tensioned state, such as when pushing the screw 19 upwards into the bore 35, 47, wherein the brim 57 is at least partly curved downwards. Thereby the outer diameter of the ring-shaped member 55 is less in the tensioned state than in the untensioned state. Preferably the brim 57 is more easily bent downwards, like in Figure 12c, than upwards. When the ring-shaped member 55 reaches the indentation 37, 45, it will spring back to its substantially normal shape, e.g. snapping into the indentation 37, 45, thereby retaining the screw 19. Although the cross-section of Figure 12b is flat, it would also be possible that the brim 57 is angled downwards. This would help to obtain the desirable characteristics that the brim 57 is more easily bent downwards than upwards.

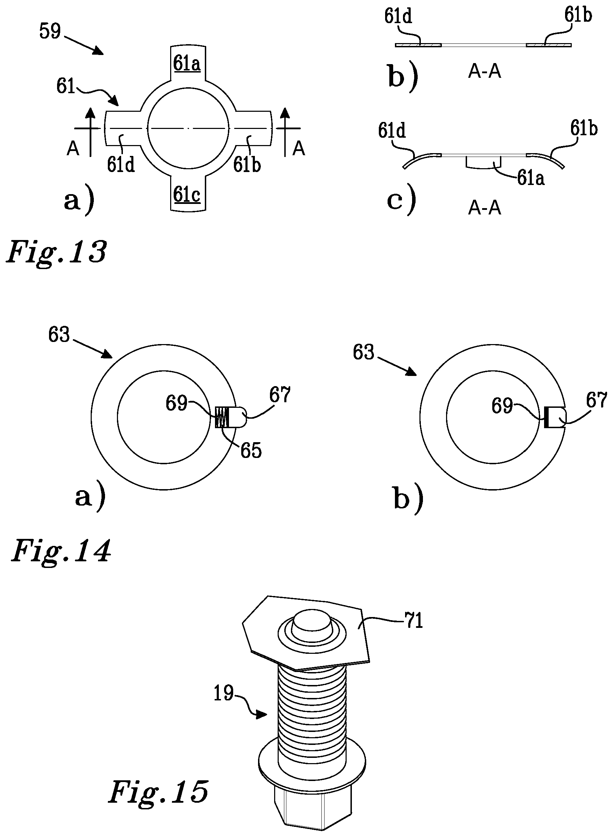

Figures 13a-c illustrate a fourth type of ring-shaped member 59. The ring-shaped member 59 comprises a brim 61, which is divided into portions 61a, 61b, 61c and 61d, which are able to flex out of the plane of the ring-shaped member 55 itself. The number of portions may be one, two, three, four, or more. Figure 13b shows the ring-shaped member 59 in an untensioned state, while Figure 13c shows the ring-shaped member 59 in a tensioned state, such as when pushing the screw 19 upwards into the bore 35, 47, wherein the brim portions 61a, 61b, 61c, and 61d are curved downwards. Thereby the outer diameter of the ring-shaped member 59 is less in the tensioned state than in the untensioned state. Preferably the brim 61 is more easily bent downwards, as in Figure 13c, than upwards. When the ring-shaped member 59 reaches the indentation 37, 45, it will spring back to its substantially normal shape, i.e. snapping into the indentation 37, 45, thereby retaining the screw 19. Although the cross-section of Figure 13b is flat, it would also be possible that the brim 61 is angled downwards. This would help to obtain the desirable characteristics that the brim 61 is more easily bent downwards than upwards.

Figures 14a and 14b illustrate a fifth type of ring-shaped member 63. The ring-shaped member 63 comprises a blind bore 65, which houses a snap member 67 and a spring member 69. The resiliency of the spring member 69 is chosen such that the snap member 67 is pushed outwards in a radial direction by the spring member 69 in an untensioned state. See Figure 14a. Figure 14b shows the ring-shaped member 63 in a tensioned state, such as when pushing the screw 19 upwards into the bore 35, 47, wherein the spring member 69 is compressed such that the snap member 67 is flush with the surface of the ring-shaped member 63. Thereby the outer diameter of the ring-shaped member 63 is less in the tensioned state than in the untensioned state. When the ring-shaped member 59 reaches the indentation 37, 45, the snap member 67 will be pushed outwards by the spring member 69, hence snapping into the indentation 37, 45, thereby retaining the screw 19. One, two, three or more snap members may be provided.

Figure 15 illustrates another kind of retaining element 71, which may have an arbitrary shape, regular or irregular, as is illustrated. The retaining element 71 is made of a thin film, e.g. made of plastic. The retaining element 71 may comprise, or be constituted by, a brim which may flex in a way already described in conjunction with Figures 12a-c.

The different variants of retaining elements illustrated in Figures 10-15 may also be held by friction to the inner wall of the bore and/or the resiliency may be used to hold them in the bore by a resilient force, e.g. when striving to go back to an original shape. If the retaining element is to be held by friction, it is preferred that the retaining element has a large enough surface area in contact with the inner wall of the bore to ascertain enough friction force. In such cases, the retaining element may extend in the axial direction of the shaft of the screw, e.g. in the range of 1-5 mm.

A method for attaching a second object, such as the inflatable curtain arrangement 3, to a first object, such as the cantrail 7, by means of the attachment assembly 17 described herein comprises the steps of:
a) Attaching the nut 21, 43, 73 to the first portion 31 of the first object, here the cantrail 7, such that the bore 35, 47, 75 is aligned with the first aperture 33,
b) Positioning the retaining element 23, 51, 55, 59, 63, 71, 81 at the screw 19, 79,
c) Placing the second object 3 adjacent to the first object 7 in a position allowing the screw 19, 79 to be screwed into the nut 21, 43, 73,
d) Applying a force in the axial direction A to the screw 19, 79, thereby pushing the retaining element through the first aperture 33 and into the bore 35 of the nut such that the retaining element is held at least in the axial direction A, e.g. by means of the indentation 37 or by friction or a resilient force,
e) Letting the retaining element retain the screw, and optionally the second object, while screwing the screw into the nut, wherein the screw cuts or forms its thread 29, 83 at the inner wall of the bore during screwing, thereby attaching the second object, here the inflatable curtain arrangement 3, to the first object, here the cantrail 7.

The step a) may be performed beforehand, such that the first object is delivered with a fixedly attached nut, e.g. to an assembly plant for vehicles.

The step b) may be performed beforehand.

If using a retaining element 81, which is fixedly attached to the shaft of the screw 79, the screw 79 and the retaining element 81 may be handled as an integral unit. The attachment of the retaining element 81 to the screw may 79 in that case be performed in a separate manufacturing line delivering the integral unit of the screw 79 and the retaining element 81. Then the integral unit is pushed through the second object 3, through the first object 7 and into the bore 75 in one pushing operation in step d). It is then assumed that the second object 3 has been placed adjacent to the first object 7 in a position allowing the screw 79 to be screwed into the nut 73.

If using a retaining element 23, 51, 55, 59, 63, 71 which is not fixedly attached to the shaft of the screw 19, the second object 3 may be delivered with the screw 19 attached to it, such that the head 25 of the screw 19 is located at one side of the second object 3 and the retaining element 23, 51, 55, 59, 63, 71 at an opposite side of the second object 3, the shaft 27 of the screw 19 going through the second aperture 39. As an alternative the retaining element 23, 51, 55, 59, 63, 71 may be positioned on the screw 19 when performing the attachment.

The retaining element 23 may be held in the indentation 37 of the nut 21 in step d), e.g. by a snap-fit function, as is described above, as would be possible for the ring-shaped member 23 of the first embodiment and for the different retaining elements described below in conjunction with Figures 7-12. As an alternative or a complement, the retaining element may be held by friction to the inner wall and/or by a resilient force resulting from deforming a resilient retaining element.

Any attachment assembly as disclosed herein may be utilized when attaching any two objects to each other as disclosed herein. The first object may be a wall or a ceiling of a building. Alternatively, the first object may be a body portion of a vehicle, e.g. a cantrail or an A, B or C pillar. The second object is typically large and/or heavy, such that it is difficult to handle for one person. If in a building, the second object may be a panel, e.g. a wall panel or ceiling panel. If in a vehicle, the second object may be a panel or an inflatable curtain arrangement.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A unit for use in an attachment assembly (17) for attaching a second object (3) to a first object (7), said unit comprising
- a thread-cutting or a thread-forming screw (79), said screw (79) having a head and a shaft, at least a portion of said shaft comprising a thread (83),
- a retaining element (81) positioned at a perimeter of said shaft of said screw (79), said retaining element (81) being fixedly attached to said screw (79) at or adjacent to an end (82) of said shaft of said screw (79),
said retaining element (81) being an end cap,
**characterized in that**
said retaining element (81) has a flat outer surface as seen along the axial direction without any flange or thread.

2. The unit according to any one of the previous claims, wherein said retaining element (81) is resilient, e.g. having a resilient shape or comprising a resilient member.

3. An attachment assembly (17) for attaching a second object (3) to a first object (7), said attachment assembly (17) comprising
- a unit according to any one of the previous claims,
- a nut (73) being adapted to be fixedly attached to said first object (7), said nut (73) comprising a bore (75) adapted for receiving said screw (79), said bore (75) having an axial direction (A) and a height (h) along said axial direction (A),
said bore (75) comprising an inner wall, at least a portion of said inner wall being adapted for receiving and holding said retaining element (81) at least in said axial direction (A),
said bore (75) being unthreaded.

4. The attachment assembly (17) according to claim 3, wherein said nut (21, 43) comprises an indentation (37, 45) adapted for receiving and holding said retaining element (23, 51, 55, 59, 63, 71) at least in said axial direction (A), said indentation (37, 45) forming a portion of said inner wall of said bore (35, 47).

5. The attachment assembly (17) according to claim 4, wherein said indentation (37) is located at a first end (49) of said bore (35) adapted to face said first object (7).

6. The attachment assembly (17) according to claim 4, wherein said indentation (45) is located within said bore (47), such that a distance x between said first end (49) of said bore (47) and said indentation (45) fulfils 0 < x ≤ h, preferably such that 0.1h ≤ x ≤ h.

7. The attachment assembly (17) according to any one of claims 3-6, wherein said retaining element (81) is adapted to be held by friction and/or by a resilient force to said at least a portion of said inner wall of said bore (75).

8. A use of an attachment assembly (17) according to any one of claims 3-7 for attaching an automotive part to a vehicle (1), wherein said first object is a body portion of said vehicle (1), e.g. a cantrail (7), and said second object is an automotive part, e.g. an inflatable curtain arrangement (3).

9. A kit comprising
- an inflatable curtain arrangement (3) for a vehicle (1),
- said unit according to any one of claims 1-2,
said inflatable curtain arrangement (3) comprising a second substantially plate-shaped portion (41) comprising a second aperture (39), said shaft of said screw (79) going through said second aperture (39), such that said head of said screw (79) is located atone side of said second portion (41) and said retaining element (81) at an opposite side of said second portion (41), said second aperture (39) having a shape which is larger than that of an inner diameter (dᵢ) of said shaft (27) of said screw (79) and less than an outer shape of said retaining element (81) and less than an outer shape of said head of said screw (79).

10. A method for attaching a second object (3) to a first object (7) by means of an attachment assembly (17) according to any one of claims 3-7,
said method comprising the steps of:
a) attaching said nut (73) to said first portion (31) of said first object (7), such that said bore (75) is aligned with said first aperture (33),
b) positioning said retaining element (81) at said screw (79),
c) placing said second object (3) adjacent to said first object (7) in a position allowing said screw (79) to be screwed into said nut (73),
d) applying a force in said axial direction (A) to said screw (79), thereby pushing said retaining element (81) through said first aperture (33) and into said bore (75) of said nut (73), such that said retaining element (81) is received and held at least in said axial direction (A),
e) letting said retaining element (81) retain said screw (79), and optionally said second object (3), while screwing said screw (79) into said nut (73), wherein said screw (79) cuts or forms its thread (83) at said inner wall of said bore (75) during screwing, thereby attaching said second object (3) to said first object (7).

## Patentansprüche

1. Einheit zur Verwendung bei einer Befestigungsbaugruppe (17) zum Befestigen eines zweiten Objekts (3) an einem ersten Objekt (7), wobei die Einheit umfasst
- eine Gewinde schneidende oder eine Gewinde formende Schraube (79), wobei die Schraube (79) einen Kopf und einen Schaft aufweist, wobei zumindest ein Abschnitt des Schafts ein Gewinde (83) aufweist,
- ein Sicherungselement (81), welches an einem Umfang des Schafts der Schraube (79) positioniert ist, wobei das Sicherungselement (81) an oder benachbart zu einem Ende (82) des Schafts der Schraube (79) fest an der Schraube (79) angebracht ist,
wobei das Sicherungselement (81) eine Endkappe ist, **dadurch gekennzeichnet, dass**
das Sicherungselement (81), wenn entlang der axialen Richtung gesehen wird, eine ebene äußere Fläche ohne jeglichen Flansch oder Gewinde aufweist.

2. Einheit gemäß einem der vorhergehenden Ansprüche, wobei das Sicherungselement (81) elastisch ist, wobei es z.B. eine elastische Form aufweist oder ein elastisches Element umfasst.

3. Befestigungsbaugruppe (17) zum Befestigen eines zweiten Objekts (3) an einem ersten Objekt (7), wobei die Befestigungsbaugruppe (17) umfasst
- eine Einheit gemäß einem der vorhergehenden Ansprüche,
- eine Mutter (73), welche dafür angepasst ist, fest an dem ersten Objekt (7) befestigt zu werden, wobei die Mutter (73) eine Bohrung (75) aufweist, welche zum Aufnehmen der Schraube (79) angepasst ist, wobei die Bohrung (75) eine axiale Richtung (A) und eine Höhe (h) entlang der axialen Richtung (A) aufweist,
wobei die Bohrung (75) eine Innenwand aufweist, wobei zumindest ein Abschnitt der Innenwand zum Aufnehmen und Halten des Sicherungselements (81) zumindest in der axialen Richtung (A) angepasst ist,
wobei die Bohrung (75) ohne Gewinde ist.

4. Befestigungsbaugruppe (17) gemäß Anspruch 3, wobei die Mutter (21, 43) eine Vertiefung (37, 45) aufweist, welche zum Aufnehmen und Halten des Sicherungselements (23, 51, 55, 59, 63, 71) zumindest in der axialen Richtung (A) angepasst ist, wobei die Vertiefung (37, 45) einen Abschnitt der Innenwand der Bohrung (35, 47) bildet.

5. Befestigungsbaugruppe (17) gemäß Anspruch 4, wobei sich die Vertiefung (37) an einem ersten Ende (49) der Bohrung (35) befindet, welches dafür angepasst, um dem ersten Objekt (7) zugewandt zu sein.

6. Befestigungsbaugruppe (17) gemäß Anspruch 4, wobei sich die Vertiefung (45) innerhalb der Bohrung (47) befindet, so dass ein Abstand x zwischen dem ersten Ende (49) der Bohrung (47) und der Vertiefung (45) 0 < x ≤ h erfüllt, vorzugsweise so dass 0,1h ≤ x ≤ h.

7. Die Befestigungsanordnung (17) gemäß einem der Ansprüche 3-6, wobei das Sicherungselement (81) dafür angepasst ist, um durch Reibung und/oder durch eine elastische Kraft an zumindest einem Abschnitt der Innenwand der Bohrung (75) gehalten zu werden.

8. Verwendung einer Befestigungsbaugruppe (17) gemäß einem der Ansprüche 3-7 zum Befestigen eines Automobilteils an einem Fahrzeug (1), wobei das erste Objekt ein Karosserieabschnitt des Fahrzeugs (1) ist, z.B. ein Dachlängsträger (7), und das zweite Objekt ein Automobilteil ist, z.B. eine aufblasbare Vorhanganordnung (3).

9. Ausrüstung, aufweisend
- eine aufblasbare Vorhanganordnung (3) für ein Fahrzeug (1),
- die Einheit gemäß einem der Ansprüche 1-2,
wobei die aufblasbare Vorhanganordnung (3) einen zweiten, im Wesentlichen plattenförmigen Abschnitt (41) aufweist, welcher eine zweite Öffnung (39) aufweist, wobei der Schaft der Schraube (79) durch die zweite Öffnung (39) hindurchgeht, so dass der Kopf der Schraube (79) sich an einer Seite des zweiten Abschnitts (41) und das Sicherungselement (81) an einer gegenüberliegenden Seite des zweiten Abschnitts (41) befindet, wobei die zweite Öffnung (39) eine Form aufweist, welche größer als jene eines inneren Durchmessers (dᵢ) des Schafts (27) der Schraube (79) und kleiner als eine äußere Form des Sicherungselements (81) und kleiner als eine äußere Form des Kopfes der Schraube (79) ist.

10. Verfahren zum Befestigen eines zweiten Objekts (3) an einem ersten Objekt (7) mittels einer Befestigungsbaugruppe (17) gemäß einem der Ansprüche 3-7,
wobei das Verfahren die Schritte umfasst:
a) Befestigen der Mutter (73) an dem ersten Abschnitt (31) des ersten Objekts (7), so dass die Bohrung (75) mit der ersten Öffnung (33) ausgerichtet ist,
b) Positionieren des Sicherungselements (81) an der Schraube (79),
c) Anordnen des zweiten Objekts (3) neben dem ersten Objekt (7) in einer Position, welche es der Schraube (79) ermöglicht, in die Mutter (73) geschraubt zu werden,
d) Aufbringen einer Kraft in der axialen Richtung (A) auf die Schraube (79), wodurch das Sicherungselement (81) durch die erste Öffnung (33) und in die Bohrung (75) der Mutter (73) gedrückt wird, so dass das Sicherungselement (81) aufgenommen und zumindest in der axialen Richtung (A) gehalten wird,
e) das Sicherungselement (81) die Schraube (79) und optional das zweite Objekt (3) sichern lassen, während die Schraube (79) in die Mutter (73) geschraubt wird, wobei die Schraube (79) während des Schraubens ihr Gewinde (83) an der Innenwand der Bohrung (75) formt oder schneidet, wodurch das zweite Objekt (3) an dem ersten Objekt (7) befestigt wird.

## Revendications

1. Unité destinée à être utilisée dans un ensemble de fixation (17) pour fixer un second objet (3) à un premier objet (7), ladite unité comprenant
- une vis tranchante ou vis autotaraudeuse (79), ladite vis (79) comportant une tête et un axe, au moins une partie dudit axe comprenant un filetage (83),
- un élément de retenue (81) positionné sur un périmètre dudit axe de ladite vis (79), ledit élément de retenue (81) étant fixé à demeure à ladite vis (79) sur ou adjacent à une extrémité (82) dudit axe de ladite vis (79),
ledit élément de retenue (81) étant un bouchon,
**caractérisée en ce que**
ledit élément de retenue (81) comporte une surface extérieure plate vue le long de la direction axiale sans aucune bride ni filetage.

2. Unité selon l'une quelconque des revendications précédentes, dans laquelle ledit élément de retenue (81) est élastique, p. ex. présente une forme élastique ou comprend un élément élastique.

3. Ensemble de fixation (17) destiné à fixer un second objet (3) à un premier objet (7), ledit ensemble de fixation (17) comprenant
- une unité selon l'une quelconque des revendications précédentes,
- un écrou (73) conçu pour être fixé à demeure audit premier objet (7), ledit écrou (73) comprenant un alésage (75) conçu pour recevoir ladite vis (79), ledit alésage (75) ayant une direction axiale (A) et une hauteur (h) le long de ladite direction axiale (A),
ledit alésage (75) comprenant une paroi interne, au moins une partie de la paroi interne étant conçue pour recevoir et retenir ledit élément de retenue (81) au moins dans ladite direction axiale (A),
ledit alésage (75) étant non fileté.

4. Ensemble de fixation (17) selon la revendication 3, dans lequel ledit écrou (21, 43) comprend une indentation (37, 45) conçue pour recevoir et retenir ledit élément de retenue (23, 51, 55, 59, 63, 71) au moins dans ladite direction axiale (A), ladite indentation (37, 45) formant une partie de ladite paroi interne dudit alésage (35, 47).

5. Ensemble de fixation (17) selon la revendication 4, dans lequel ladite indentation (37) est située à une première extrémité (49) dudit alésage (35) de manière à faire face audit premier objet (7).

6. Ensemble de fixation (17) selon la revendication 4, dans lequel ladite indentation (45) est située à l'intérieur dudit alésage (47) de sorte qu'une distance x entre ladite première extrémité (49) dudit alésage (47) et ladite indentation (45) satisfait à la formule 0 < x ≤ h, de préférence 0,1h ≤ x ≤ h.

7. Ensemble de fixation (17) selon l'une quelconque des revendications 3 à 6, dans lequel ledit élément de retenue (81) est conçu pour être retenu par frottement et/ou par une force élastique à ladite au moins une partie de ladite paroi interne dudit alésage (75).

8. Utilisation d'un ensemble de fixation (17) selon l'une quelconque des revendications 3 à 7 pour fixer une partie automobile à un véhicule (1), ledit premier objet étant une partie de carrosserie dudit véhicule (1), p. ex. un renfort de toit (7) et ledit second objet est une partie automobile, p. ex. un agencement de rideau gonflable (3).

9. Kit comprenant
- un agencement de rideau gonflable (3) pour un véhicule (1),
- ladite unité selon l'une quelconque des revendications 1 et 2,
ledit agencement de rideau gonflable (3) comprenant une seconde partie sensiblement en forme de plaque (41) comprenant une seconde ouverture (39), ledit axe de ladite vis (79) passant à travers ladite seconde ouverture (39), de sorte que ladite tête de ladite vis (79) se trouve sur un côté de ladite seconde partie (41) et ledit élément de retenue (81) sur un côté opposé de ladite seconde partie (41), ladite seconde ouverture (39) présentant une forme qui est plus grande que celle d'un diamètre interne (dᵢ) dudit axe (27) de ladite vis (79) et inférieure à une forme extérieure dudit élément de retenue (81) et inférieure à une forme extérieure de ladite tête de ladite vis (79).

10. Procédé de fixation d'un second objet (3) à un premier objet (7) au moyen d'un ensemble de fixation (17) selon l'une quelconque des revendications 3 à 7,
ledit procédé comprenant les étapes de :
a) fixation dudit écrou (73) sur ladite première partie (31) dudit premier objet (7) de sorte que ledit alésage (75) soit aligné sur ladite première ouverture (33),
b) positionnement dudit élément de retenue (81) sur ladite vis (79),
c) positionnement dudit second objet (3) de manière adjacente audit premier objet (7) dans une position permettant de visser ladite vis (79) dans ledit écrou (73),
d) application d'une force dans ladite direction axiale (A) à ladite vis (79), ce qui permet de pousser ledit élément de retenue (81) à travers ladite première ouverture (33) et dans ledit alésage (75) dudit écrou (73) de sorte que ledit élément de retenue (81) soit reçu et retenu au moins dans ladite direction axiale (A),
e) la conservation de la retenue par ledit élément de retenue (81) de ladite vis (79) et facultativement dudit second objet (3), tout en vissant ladite vis (79) dans ledit écrou (73), ladite vis (79) découpant ou formant un filetage (83) sur ladite paroi interne dudit alésage (75) pendant le vissage, ce qui permet de fixer ledit second objet (3) audit premier objet (7).
